# EUROPÄISCHE PATENTSCHRIFT

(11) **EP 1 759 961 B1**
(45) Veröffentlichungstag und Bekanntmachung des Hinweises auf die Patenterteilung: **25.02.2009**
(21) Anmeldenummer: 06017705.2
(22) Anmeldetag: 25.08.2006
(51) Int. Cl.: B62D 25/08

(54) **Fahrzeug-Frontend mit oberem und unterem Querträger**
Vehicle front end with upper and lower cross beams
Face avant de véhicule automobile comprenant une traverse supérieure et une traverse inférieure

(30) Priorität: 02.09.2005 DE 102005041757
(43) Veröffentlichungstag der Anmeldung: 07.03.2007
(73) Patentinhaber: HBPO GmbH, 59775 Lippstadt (DE)
(72) Erfinder: Schlüter, Sascha, Dipl.-Ing., 26842 Ostrhauderfehn (DE)
(74) Vertreter: Elbertzhagen, Otto

(56) Entgegenhaltungen:
- EP-A- 1 645 451
- EP-A- 1 698 520
- WO-A-20/04056619
- WO-A-20/05070747
- DE-A1- 10 337 870
- DE-A1- 19 911 833
- FR-A- 2 862 262
- US-A- 4 566 407
- US-A1- 2001 001 994
- US-A1- 2004 084 236
- US-A1- 2004 144 522

## Beschreibung

Die Erfindung bezieht sich auf ein Frontend für Personen- oder Kleinlastkraftwagen.

Die für die Bauvorschriften für Personen- oder Kleinlastkraftwagen zuständigen Gremien der Europäischen Union haben Vorschriften erlassen, die sich auf den Fußgängerschutz im Frontbereich der erwähnten Kraftfahrzeuge beziehen. Hierzu gehört die Vorschrift 2004/90 EG, welche vorgibt, welche Verformungswege mit welchen Verzögerungen im Falle eines Fußgängeraufpralls im Hüftbereich zur Verfügung stehen müssen, um an der Frontseite eines Kraftfahrzeugs einen optimalen Fußgängerschutz zu erzielen. Getestet werden die Verformungswerte mittels einem den Fußgängeraufprall simulierenden Prüfkörper, der eine ebene Aufprallseite aufweist, die je nach der Frontgestaltung des zu prüfenden Fahrzeugs unter einem vorgegebenen Winkel zur Fahrzeugaufstandsebene steht.

Beim Bau von Personen- oder Kleinlastkraftwagen werden heutzutage vormontierte Frontends verwendet, um eine rationelle Fertigung zu ermöglichen. Hierzu ist vom Fahrzeughersteller das Frontdesign vorgegeben, welches in vielen Fällen die Einhaltung eines ausreichenden Fußgängeraufprallschutzes erschwert. Denn es wird eine möglichst geringe Bauhöhe des Fahrzeug-Vorderwagens angestrebt.

Notwendig bei solchen Frontends ist zum einen ein oberer Querträger, der als Schloßquerträger erhebliche Kräfte während des Fahrbetriebs aufzunehmen hat, die in ihn von der an ihm verriegelten Fahrzeugfronthaube eingeleitet werden. Zum anderen ist bei den Frontends ein unterer Stoßfängerquerträger erforderlich, der wichtige Funktionen beim Auffahren des Fahrzeugs auf ein Hindernis erfüllt. Beide Querträger sind steife Bauteile, die fest mit der Karosseriestruktur, wie den Stirnenden der Fahrzeuglängsträger verbunden werden. Des weiteren ist durch die Zulassungsvorschriften die Höhenlage des Stoßfängerquerträgers bestimmt, was im Bereich des Stoßfängerquerträgers den gestalterischen Spielraum begrenzt und vor allem eine Reduzierung der Bauhöhe des Vorderwagens unter Berücksichtigung der hier unterzubringenden Kühlkomponenten betrifft.

Das Dokument DE199 11 833 offenbart ein Frontend für Personen- oder Kleinlastkraftwagen mit einem oberen Querträger, unterhalb dessen zumindest eine Kühlkomponente angeordnet ist, und mit einem in Fahrzeuglängsrichtung vor dem Querträger sowie in Fahrzeughöhenrichtung tiefer als der Querträger angeordneten Stossfängerquerträger mit einem Überzug, an dem nach oben hin eine Frontverkleidung und daran geneigt ansteigend eine Fronthaube anschließen, wobei der obere Querträger und der Stossfängerquerträger derart gegeneinander versetzt angeordnet sind, dass die fiktive Grenzfläche, welche durch die Schar der Verbindungslinien zwischen der vorderen Oberkante des Stossfängerquerträgers und der vorderen Oberkante des oberen Querträgers gebildet ist, einen Neigungswinkel zur Fahrzeugaufstandsebene hat.

Dazu ist den Dokumenten DE 199 11 832 C2 und DE 199 11 833 C2 zur Realisierung des Fußgängerschutzes bei der Konstruktion des Fahrzeugvorderwagens eine Vielzahl von Querträgern und Absorptionselementen vor und über den Kühlkomponenten vorgeschlagen worden. Um hierbei die Kühlkomponenten mit der erforderlichen Kühlluft zu versorgen, ist oberhalb des Stoßfängerquerträgers eine Kühlluftzuführung notwendig, die eine Unterbrechung der Steifigkeitsstruktur für den Hüftaufprall darstellt. Bei dem weiter oben erwähnten Aufpralltest nach der Richtlinie 2004/90 EG entstehen hierdurch Kraftspitzen, die für die Erlangung eines optimalen Fußgängerschutzes nachteilig sind. Dies gilt auch für Teile des dort vorgesehenen Schildrahmens, an dem nach Art eines Schloßquerträgers Verriegelungselemente für die Fahrzeugfronthaube angeordnet sind und der mit einer Querplatte in den Deformationsbereich der Außenhaut des Vorderwagens hineinragt.

Es sind deshalb schon Vorschläge gemacht worden, um auf andere Weise einen definierten Verformungsweg der Vorderwagen-Außenhaut im Falle eines Fußgängeraufpralls vorzugeben. Dazu werden unter der Motorhaube und/oder der Frontverkleidung Airbags vorgesehen, welche für die sich beim Aufprall verformende Vorderwagen-Außenhaut für einen ausreichenden Verformungsweg sorgen, über den hinweg eine bestimmte Verzögerung des aufprallenden Körpers erreicht wird. Zum gleichen Zweck versucht man auch, mittels pyrotechnischer Einrichtungen Teile der Vorderwagen-Außenhaut im Aufprallmoment anzuheben, der Erfolg dieser Maßnahme erscheint jedoch zweifelhaft.

Der Erfindung liegt die Aufgabe zugrunde, ein Frontend für Personen- oder Kleinlastkraftwagen mit den eingangs genannten Merkmalen zu schaffen, welches für die Fahrzeugaußenhaut einen Verformungsbereich mit einem Verformungswiderstand vorgibt, der auf die für die Feststellung eines optimalen Fußgängerschutzes festgelegte Prüfmethode ausgelegt ist und bei Einhaltung dieses Verformungsbereichs eine niedrige Bauhöhe des Fahrzeugvorderwagens ermöglicht.

Diese Aufgabe wird bei einem Frontend der vorgenannten Art durch die Merkmale des Patentanspruchs 1 gelöst.

Für die Erfindung ist wesentlich, daß die zur Erlangung eines optimalen Fußgängerschutzes gewonnenen Erkenntnisse, die bei der Festlegung des Prüfverfahrens berücksichtigt wurden, für die Konstruktion des erfindungsgemäßen Frontends maßgeblich sind. Dabei wird davon ausgegangen, daß der untere Stoßfängerquerträger in seiner Lage fest vorgegeben ist und sich danach unter Berücksichtigung der Vorschrift 2004/90 EG die Position des oberen Querträgers, nämlich des Schloßquerträgers, bestimmt. Unterhalb der hiernach angenommenen Grenzfläche finden sich bei dem erfindungsgemäßen Frontend nur steifere Strukturbauteile oder solche Bauteile, die eine stetige Verzögerung über einen vorgegebenen Verformungsweg hinweg eines auf die Außenhaut des Frontends aufprallenden Körpers nachteilig beeinflussen würden. Oberhalb der fiktiven Grenzfläche befinden sich somit ausschließlich Bauteile, die über einen bestimmten Verformungsweg hinweg eine stetige Verzögerung des aufprallenden Körpers ermöglichen. Deshalb werden als weichere Bauteile oberhalb der fiktiven Grenzfläche vorzugsweise Kunststoffteile verwendet, dies gilt auch für die einen Teilbereich der Außenhaut des Frontends bildende Frontverkleidung, welche sich an den Stoßfängerüberzug nach oben hin anschließt. Somit ist oberhalb der definierten Grenzfläche eine Energieabsorptionsstruktur geschaffen, die sich an dem Prüfungsverfahren für den Fußgängerhüftaufprall nach der erwähnten EU-Vorschrift orientiert, welche von dem optimal Erreichbaren ausgeht.

Vorteilhafte Ausgestaltungsmerkmale der Erfindung ergeben sich aus den Unteransprüchen.

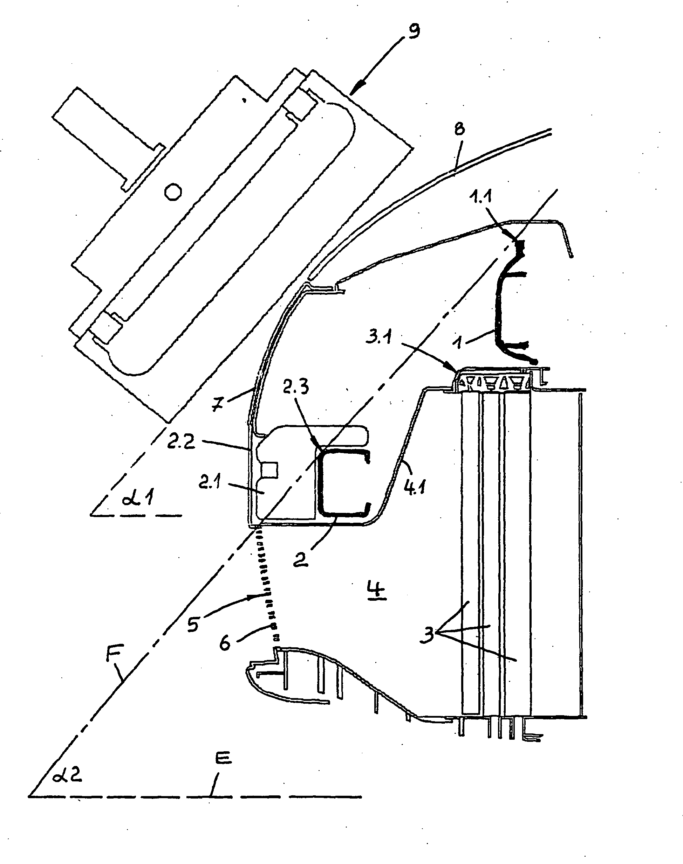

Die Erfindung wird nachfolgend anhand der Zeichnung an einem Ausführungsbeispiel noch näher erläutert. Die Zeichnung zeigt einen schematischen Vertikalschnitt durch ein Frontend eines Personenkraftwagens entlang der Fahrzeuglängsmitte.

Im einzelnen ist an dem in der Zeichnung wiedergegebenen Frontend ein oberer Querträger zu erkennen, bei dem es sich um ein steifes Strukturbauteil handelt. Der obere Querträger 1 ist Teil eines Montageträgers und fungiert als Schloßquerträger, wobei in der schematischen Darstellung die weiter nach hinten verlegten Schloßunterteile für die Haubenverriegelung nicht wiedergegeben sind. Weiter weist das Frontend einen Stoßfängerquerträger 2 auf, der in Fahrzeuglängsrichtung gesehen vor dem oberen Querträger 1 und in Fahrzeughöhenrichtung gesehen tiefer als der Querträger 1 angeordnet ist. Der Stoßfängerquerträger 2 ist mit der im übrigen nicht dargestellten Fahrzeugstruktur fest verbunden, dies geschieht über eine Crashbox an den in der Zeichnung nicht dargestellten vorderen Stirnenden der Fahrzeuglängsträger, an denen zugleich der den oberen Querträger 1 bildenden Montageträger verschraubt wird.

Unterhalb des oberen Querträgers 1 befinden sich ein oder mehrere Kühlelemente 3, die von dem Montageträger gehalten werden. Es handelt sich um Hochleistungskühlkomponenten, die in der Bauhöhe reduziert sind. Dennoch ragen die hinter dem Stoßfängerquerträger 2 angeordneten Kühlelemente 3 nach oben hin über den Stoßfängerquerträger 2 hinaus. Deshalb ist ein Luftführungskanal 4 vorgesehen, der einen Kühllufteinlaß 5 unterhalb des Stoßfängerquerträgers 2 aufweist, der mit einem sogenannten Kühlergrill 6 ausgestattet sein kann. In Fahrzeuglängsrichtung hinter dem Stoßfängerquerträger 2 erweitert sich der Luftführungskanal 4 vor allem nach oben hin und ist dazu mit einer oberen Wandung 4.1 versehen, die bis zu den oberen Seiten der Kühlelemente 3 hin geneigt ansteigt.

Der Stoßfängerquerträger 2 weist an seiner Vorderseite ein Dämpfungselement 2.1 auf, welches außenseitig von einem Stoßfängerüberzug 2.2 kaschiert ist. An den Stoßfängerüberzug 2.2 schließt nach oben hin eine Frontverkleidung 7 an, deren Außenkontur stetig in die Außenform einer Fronthaube 8 übergeht, die von dem Anschluß an die Frontverkleidung 7 mit ständig geringer werdender Neigung ansteigt.

Die Frontverkleidung 7 und die Fronthaube 8 bilden zusammen die Außenhaut des Frontends in demjenigen Bereich, der zur Prüfung eines vorhandenen Fußgängerschutzes mit einem Prüfkörper 9 beaufschlagt wird. Dazu nimmt der Prüfkörper 9 mit seiner ebenen Stoßseite zur Fahrzeugaufstandsebene E einen Winkel α₁ ein. Je nach der Frontgestaltung des Frontends kommen unterschiedliche Aufprallstellen des Prüfkörpers 9 in Betracht, dementsprechend kann sich der Aufprallwinkel α₁ ändern. Bei dem Frontend sind der obere Querträger 1 und der untere Stoßfängerquerträger 2 so in Relation zueinander angeordnet, daß durch die Schar der geraden Verbindungslinien, welche die vordere Oberkante 1.1 des oberen Querträgers 1 und die vordere Oberkante 2.3 des Stoßfängerquerträgers 2 tangieren, eine fiktive Grenzfläche F definieren. Diese Grenzfläche F ist eine entsprechend dem Verlauf der Oberkante 1.1. des oberen Querträgers 1 und dem Verlauf der vorderen Oberkante 2.3 des Stoßfängerquerträgers 2 gewölbte Fläche, die an denjenigen Stellen, auf welche die Stoßrichtung des Prüfkörpers 9 gerichtet ist, senkrecht zur Stoßrichtung des Prüfkörpers 9 steht. Dadurch wiederum ist an diesen Stellen der Neigungswinkel α₂, den die Grenzfläche F zur Aufstandsebene E des Fahrzeugs an dieser Stelle einnimmt, der gleiche wie der Winkel α₁, um den bezogen auf diese Stelle der Grenzfläche F der Prüfkörper 9 relativ zur Fahrzeugaufstandsebene E geneigt ist.

Durch die Grenzfläche F wird bis zu der Frontverkleidung 7 und der Motorhaube 8 hin ein Deformationsraum 10 vorgegeben, der nur Einbauten mit einem solchen Verformungswiderstand enthält, daß der aufprallende Prüfkörper 9 bei Deformation der Frontverkleidung 7, der Motorhaube 8 und der erwähnten Einbauten mit der ihm vorgegebenen Aufprallgeschwindigkeit einen bestimmten Weg mit gleichmäßiger Verzögerung bis zum Stillstand zurücklegt, mit dem ein optimaler Fußgängerschutz im Hüftbereich erzielt werden kann. Die Frontverkleidung 7, die Motorhaube 8 und die Einbauten zwischen diesen Bauteilen und der fiktiven Grenzfläche F bestehen deshalb aus einem entsprechenden Kunststoff. Unterhalb der Grenzfläche F sind diejenigen Bauteile angeordnet, bei denen es sich entweder um steife Strukturbauteile, wie den oberen Querträger 1 und den Stoßfängerquerträger 2, oder auch um für die Aufpralldämpfung weniger geeignete Bauteile handelt, wie die obere Wandung 4.1 des Luftführungskanals 4. So ist auch die vordere Oberkante 3.1 der Kühlelemente 3 unterhalb der Grenzfläche F angeordnet.

## Patentansprüche

1. Frontend für Personen- oder Kleinlastkraftwagen mit einem oberen Querträger (1), unterhalb dessen zumindest eine Kühlkomponente (3) angeordnet ist, und mit einem in Fahrzeuglängsrichtung vor dem Querträger (1) sowie in Fahrzeughöhenrichtung tiefer als der Querträger (1) angeordneten Stoßfängerquerträger (2) mit einem Überzug (2.2), an dem nach oben hin eine Frontverkleidung (7) und daran geneigt ansteigend eine Fronthaube anschließen, wobei
der obere Querträger (1) und der Stoßfängerquerträger (2) derart gegeneinander versetzt angeordnet sind, daß die fiktive Grenzfläche (F), welche durch die Schar der Verbindungslinien zwischen der vorderen Oberkante (2.3) des Stoßfängerquerträgers (2) und der vorderen Oberkante (1.1) des oberen Querträgers (1) gebildet ist, einen Neigungswinkel (α₂) zur Fahrzeugaufstandsebene (E) hat, der gleich dem zu dieser Ebene (E) vorgegebenen Aufprallwinkel (α₁) des bei der Prüfung des Fußgängerschutzes im Hüftbereich nach den Vorschriften der EU-richtlinie 2004/90 EG anzuwendenden Prüfkörpers (9) ist, wobei nach vorn hin sowie oberhalb der fiktiven Grenzfläche (F) ein Deformationsraum (10) für die Frontverkleidung (7) und die Motorhaube (8) gebildet ist, in welchem sich ausschließlich Bauteile mit geringem Verformungswiderstand befinden.

2. Frontend nach Anspruch 1,
**dadurch gekennzeichnet,**
**daß** der Kühllufteinlaß (5) für das zumindest eine Kühlelement (3) unterhalb des Stoßfängerquerträgers (2) angeordnet ist, wobei die obere Wandung (4.1) des Luftführungskanals (4) zwischen dem Kühllufteinlaß (5) und dem Kühlelement (3) hinter dem Stoßfängerquerträger (2) ansteigend unterhalb der fiktiven Grenzfläche (F) verläuft.

3. Frontend nach Anspruch 2,
**dadurch gekennzeichnet,**
**daß** die vordere Oberkante (3.1) des zumindest einen Kühlelementes (3) in Fahrzeuglängsrichtung vor dem Schloßquerträger (1) und in Fahrzeughöhenrichtung unterhalb der fiktiven Grenzfläche (F) angeordnet ist.

4. Frontend nach einem der Ansprüche 1 - 3,
**dadurch gekennzeichnet,**
**daß** die Frontverkleidung (7) und die in dem Deformationsraum (10) oberhalb der fiktiven Grenzfläche (F) befindlichen Bau-teile aus Kunststoff bestehen.

## Claims

1. Front end for motor car or small heavy goods vehicle with an upper cross beam (1), below which at least one cooling component (3) is arranged, and with a bumper cross beam (2) arranged in front of the cross beam (1) in the vehicle longitudinal direction and below the cross beam (1) in the vehicle height direction, said bumper cross beam (2) having a cover (2.2), to which a front panel (7) connects upwardly and inclined thereon upwardly a bonnet, wherein
the upper cross beam (1) and the bumper cross beam (2) are offset relative to each other so that the fictitious boundary area (F) which is formed by the set of connecting lines between the front upper edge (2.3) of the bumper cross beam (2) and the front upper edge (1.1) of the upper cross beam (1) is at an angle of inclination (α₂) to the vehicle contact plane (E) which is equal to the impact angle (α₁), predefined in relation to this plane (E), of the test body (9) to be used in testing the pedestrian protection in the waist region according to the provisions of the EU guideline 2004/90 EC, whereby in front of and above the fictitious boundary area (F) a deformation space (10) is formed for the front panel (7) and the bonnet (8), in which there are exclusively components with a low deformation resistance.

2. Front end according to claim 1,
**characterised in that**
the cooling air inlet (5) for the at least one cooling element (3) is arranged below the bumper cross beam (2), whereby the upper wall (4.1) of the air conducting channel (4) extends between the cooling air inlet (5) and the cooling element (3) behind the bumper cross beam (2) upwardly below the fictitious boundary area (F).

3. Front end according to claim 2,
**characterised in that**
the front upper edge (3.1) of the at least one cooling element (3) is arranged in front of the locking cross beam (1) in the vehicle longitudinal direction and below the fictitious boundary area (F) in the vehicle height direction.

4. Front end according to one of the claims 1 - 3,
**characterised in that**
the front panel (7) and the components arranged in the deformation space (10) above the fictional boundary area (F) are made of plastic.

## Revendications

1. Face avant d'une voiture particulière ou d'une fourgonnette, avec une traverse supérieure (1), sous laquelle est disposé au moins un élément de refroidissement (3), et avec une traverse de pare-chocs (2) disposée devant la traverse (1), dans le sens de la longueur du véhicule automobile, ainsi que plus bas que la traverse (1), dans la sens de la hauteur du véhicule automobile, avec un revêtement (2.2), auquel se raccordent, vers le haut, un revêtement frontal (7) et un capot frontal incliné vers celui-ci,
la traverse supérieure (1) et la traverse de pare-choc (2) étant décalées l'une par rapport à l'autre de sorte que la surface limite fictive (F), qui est formée par le réseau de lignes de jonction entre le bord supérieur (2.3) de la traverse du pare-chocs (2) et le bord avant ((1.1) de la traverse supérieure (1) présente, par rapport au plan de contact au sol (E) du véhicule automobile, un angle d'inclinaison (α₂), qui est égal à l'angle d'impact (α₁) prédéterminé à ce plan (E) pour le bloc d'essai (9) à utiliser lors du test de protection piétons, dans la zone des hanches, conformément aux prescription de la directive de l'EU 2004/90 EG, un espace de déformation (10) pour le revêtement frontal (7) et le capot du moteur (8) étant formé, vers l'avant ainsi qu'au-dessus de la surface limite fictive (F), espace dans lequel se trouvent exclusivement des composants de faible résistance à la déformation.

2. Face avant selon la revendication 1,
**caractérisée en ce que**
l'orifice d'admission d'air de refroidissement (5) pour l'élément de refroidissement (3) au moins existant est disposé au-dessous de la traverse de pare-choc (2), la paroi supérieure (4.1) du canal de conduite d'air (4) s'étendant entre l'orifice d'admission d'air de refroidissement (5) et l'élément de refroidissement (3), en pente ascendante derrière la traverse de pare-choc (2), au-dessous de la surface limite fictive (F).

3. Face avant selon la revendication 2,
**caractérisée en ce que**
le bord supérieur avant (3.1) de l'élément de refroidissement (3) au moins existant est disposé dans le sens de la longueur du véhicule automobile, en avant de la traverse du pare-chocs (3) et dans le sens de la hauteur du véhicule automobile, au-dessous de la surface limite fictive (F).

4. Face avant selon l'une des revendications 1 à 3,
**caractérisée en ce que**
le revêtement frontal (7) et les composants, situés dans l'espace de déformation (10), au-dessus de la surface limite fictive (F), sont en matière synthétique.
